Europäisches Patentamt

European Patent Office

Office européen des brevets

(19)

(11) Publication number: **0 196 767 B1**

## EUROPEAN PATENT SPECIFICATION

(12)

(45) Date of publication of patent specification: **22.04.92**  (51) Int. Cl.⁵: **H02G 15/192,** H02G 15/18, H02G 15/24

(21) Application number: **86301293.6**

(22) Date of filing: **24.02.86**

(54) **Pressurizable splice case.**

(30) Priority: **29.03.85 GB 8508302**

(43) Date of publication of application:
**08.10.86 Bulletin  86/41**

(45) Publication of the grant of the patent:
**22.04.92 Bulletin  92/17**

(84) Designated Contracting States:
**AT BE CH DE FR GB IT LI NL SE**

(56) References cited:
**EP-A- 0 148 758**
**DE-A- 1 908 996**
**FR-A- 2 373 903**
**FR-A- 2 440 104**

(73) Proprietor: **N.V. RAYCHEM S.A.**
**Diestsesteenweg 692**
**B-3200 Kessel-lo(BE)**

(72) Inventor: **Nolf, Jean Marie Etienne**
**6, Chaussee de Namur**
**B-5990 Hamme-Mille(BE)**
Inventor: **Winfield, Philip Roland**
**6, Keels**
**Cricklade Wiltshire(GB)**

(74) Representative: **Benson, John Everett et al**
**Raychem Limited Intellectual Property Law**
**Department Faraday Road Dorcan**
**Swindon, Wiltshire SN3 5HH(GB)**

## Description

This invention relates to splice cases for enclosing substrates such as splices in telecommunications cables, and preferably to pressurizable splice cases.

Splices between cables, for example, must be protected against the environment if corrosion and other chemical and mechanical damage is to be prevented. Such protection is provided by fabricating a splice case around the splice using plastics or other materials which are bonded or sealed to the cables at either side of the splice using high performance adhesives or sealants. Some cables are internally pressurized in order to help keep out contaminants such as water vapour and to provide quick warning of cable damage (by means of a noticeable localized pressure drop), and splice cases between such cables must be pressure resistant if pressure is to be transmitted along the cable and if the beneficial effects of pressurization are to be felt in the splice cases themselves.

UK Patent Specification 1545128 discloses a splice case for a pressurized cable. Moulded plastics parts are provided around the cable at each side of the splice and a central sleeve extends from one moulded part to the other, bridging the splice itself. Each moulded part has a tubular extension through which the cable passes; the extension is heat-shrunk into engagement with the cable and faces towards the cable splice. Thus, when the splice case is completed, pressure within it tends to force the tubular extensions into engagement with the cable and the bonds between the extensions and the cable are not put in peel. The seal between the moulded parts and the central sleeve is also pressure resistant because internal pressure tends to force a flange of the moulded parts (on which the sleeve lies) further against the sleeve. An external clamp is provided to prevent excessive distortion.

Whilst this solution is in general satisfactory, the various parts have to be manufactured to close tolerances and, in its simplest embodiment at least, the product is not able to maintain sealing over long periods of time under a high positive external pressure.

Some freedom over the size of cables to be enclosed may be achieved if the moulded parts of the above design are replaced by V-seals (strips of plastics material, substantially V-shaped in cross-section, which can open out in response to pressure) and if the central sleeve is replaced by a shrinkable sleeve. The use of V-seals is disclosed in UK patent specification 2040106. Again, the results are satisfactory, but installation requires a considerable amount of heat to shrink the shrinkable sleeve.

We have discovered that the use of a sheet of flexible material can allow sealing to be maintained over positive and/or negative external pressures if the sheet is called upon to provide only sealing, and mechanical restraining is provided by a separate substantially rigid casing and/or support.

Thus the invention provides an assembly suitable for environmentally protecting a cable splice, which comprises:

an impermeable sheet that can be wrapped around the splice and which, optionally together with end supports, substantially totally encloses the splice;

a sealing material that together with the sheet can form an environmental seal around the splice; and

a casing that may be positioned around the wrapped splice;

characterized in that the sheet is flexible and has an edge portion that is substantially V-shaped in cross-section, the arms of the V being able to open out in response to a pressure difference between the

outside and inside of the wrapped sheet such that a seal formed by the sealing material to the sheet is not put into peel by the pressure difference.

The outer casing may be impermeable and have the form of a cylinder. In this case the cylinder will house the cable splice and the problem of pressure retention reduces to sealing the annular space between the ingoing cables and the ends of the cylinder that surround them. Internal end supports may partially fill these annular spaces and be sealed both to the cables which they surround and to the cylindrical casing which surrounds them. The flexible impermeable sheet may provide a seal between the end supports or the cables entering the splice region and a cylindrical housing. Thus, the supports and the housing, which may be substantially rigid, provide a retaining function, holding the flexible sheet whose only function is sealing. The functions of restraint and sealing are therefore separated.

A way of providing resistance to higher pressures either side of the wrapped sheet is to employ the sheet in such a configuration that it extends across the splice, and at each end can open out in response to excess pressure at one side (for example higher internal pressure). Here one may accept that at least part of the seal (for example that between the sheet and the casing) may fail if the outside pressure is higher; such failure does not, however, provide a leak path from the outside of the assembly to the inside due to the extension of the sheet from one end support to the other. This is illustrated in the drawings.

Sealing of the sheet to the support or to the cables (and to the casing if desired) may be enhanced by the use of sealants, adhesives or gels, or other sealing material, any of which may be applied directly to the sheet,casing cables or support or may be applied on a backing, for example in tape form. The use of a gel may allow higher temperature performance and ease of re-entry. In general, a gel comprises a material having a cone penetration value of from 100-350 ($10^{-1}$mm) (according to ASTM D217-68) and an ultimate elongation of at least 200%, and optionally an elastic modulus of less than $10^{-7}$ dynes/cm$^2$. In particular the material may be prepared by gelling a liquid mixture comprising 20-40% of curable polyurethane precursor materials and 80-60% of a mixture of mineral oil and vegetable oil in which the ratio of mineral oil to vegetable oil is 0.7 to 2.4, the percentages being by weight based on the total weight of the polyurethane precursor materials and the mixture of mineral and vegetable oils.

The end supports, where provided, preferably are dimensionally-recoverable, particularly heat-shrinkable, in order to enhance sealing between them and the cables (or other substrates), the flexible sheet, or the casing. In particular, they are preferably electrically heat-shrinkable since this allows selected portions of them to be recovered in isolation from other portions, for example where a cable branch-off is to be sealed selected cable outlets only may be required to be recovered. In some embodiments, the support may be provided by at least part of the substrate to be enclosed, no discrete part being required. This may be preferred where the substrate to be enclosed is of substantially uniform cross-sectional size or where the outer casing is profiled to suit the shape of the substrate.

It may be desirable that the assembly or at least the outer casing is of the wrap-around rather than tubular design. By this we mean that it can be installed around a substrate such as a cable without access to a free end of the cable. Thus, a wrap-around casing will not be permanently closed in cross-section, but may be in the form of half-shells which can be joined together or in the form of a flexible sleeve that can be wrapped or folded around the cable. The end supports, where provided, also may be of the wrap-around design.

Some means is preferably provided for holding the end supports relative to one another particularly to provide the assembly with axial and/or torsional strength. Rods or bars may extend from one end support to the other, one or more of which may provide a support against which the flexible sheet can bear when the assembly is subjected to excess external pressure if it is the type mentioned above where the sheet extends from one end support to the other.

The overlapping longitudinal edges of the flexible sheet may tend to move relative to one another under excess internal pressure, although this movement may ultimately be checked by the overlying casing. Such movement may be further checked by the rods or bars mentioned, or by other longitudinal members, which are attached to the edge portions of the sheet for example by adhesive or by running in pockets therein.

The invention is further illustrated by the accompanying drawings, in which:

Figure 1 shows a prior art pressurized splice case;

Figure 2 is an exploded perspective view of a first embodiment according to the invention;

Figure 3 is a longitudinal cross-sectional view of the embodiment of Figure 2;

Figure 4 is a plan view of the flexible sheet used in the embodiment of Figures 2 and 3;

Figure 5 is a view of a modified flexible sheet;

Figure 6 is a transverse section through a first embodiment;

Figure 7 is a partial longitudinal cross-sectional view of a second embodiment;

Figure 8 shows a current in-rush regulator for use with an embodiment of the invention employing a heat-recoverable sleeve; and

Figure 9 shows an article for sealing having a gel thereon.

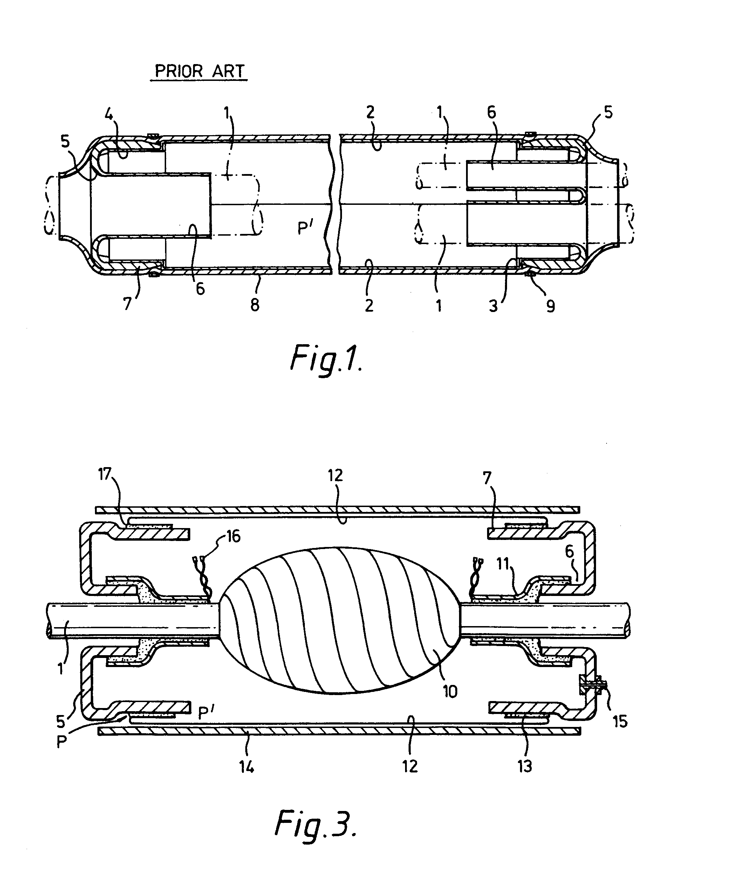

Figure 1 shows a prior art splice case built up around cables 1 (the splice itself being omitted from the drawing for clarity). The splice case is formed from metal half-shells 2 having flanges 3 at their ends, which flanges engage support rings 4. The support rings 4 support end supports 5 which comprise inner dimensionally-recoverable parts 6 which engage the cable 1 and outer parts 7. A dimensionally recoverable sleeve 8 surrounds the entire structure, except for outer clamps 9 which hold the sleeve 8 against the end supports 5.

It can be seen that an excess pressure $P^1$ within the splice case will not put into peel the seal between parts 6 and the cables 1, or between the parts 7 and the sleeve 8. The design however requires reasonably close tolerances, and a high excess external pressure may tend to put the seals referred to into peel.

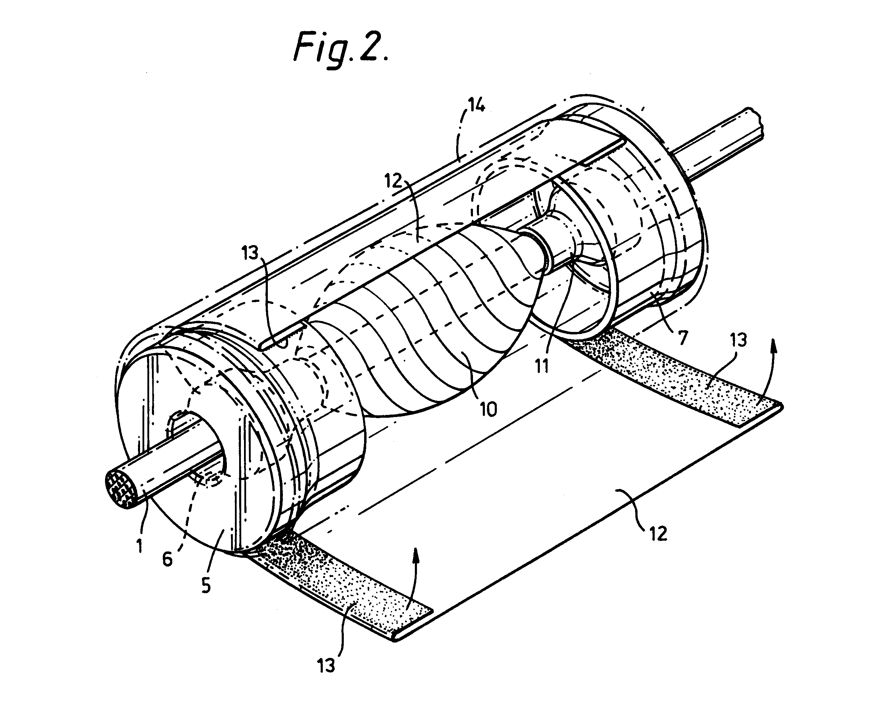

A first embodiment of the invention is shown in Figure 2. The assembly shown includes end supports 5 which are of unitary construction (as shown on the right of the drawing) or which include a discrete sealing tube or other member 11 for sealing to the cable (as shown on the left of the drawing). This seal to the cable may be by means of an adhesive or other sealant material, by mechanical means or by dimensional recovery, or by two or more of these techniques. Where recovery is by means of heat, the recoverable portion may include a temperature indicator such as a coating of a thermochromic or other temperature-indicating paint to provide an indication when sufficient heat has been applied. The flexible sheet 12, having edge portions 13 that are substantially V-shaped in cross-section (sometimes referred to as re-entrant edge portions) is wrapped around the end supports 5, as indicated in the drawing by the arrows. The separate supports 5 may be omitted and the sheet 12 may bear directly onto the cables. The re-entrant portions 13 are preferably closed at their ends or arranged to form a continuous annulus when installed. The re-entrant portions may be provided with an internal release layer, such as a foam strip resiliently expansible member, for example to ensure that their substantially V-shaped cross-section remains open or is able to open out in response to pressure within the splice case. The sheet thus forms a pressure retaining enclosure from the periphery of one end support to the periphery of the other end support. When we refer to a V-shape we are not limited to the shape of any "V" as printed (for example a letter "u" is to be regarded as substantially V-shaped); all that is necessary is the provision of two surfaces that can open out and that directly or indirectly meet to prevent pressure escaping between them. The term V-seal is well known in the art, although in the context of strips of material as disclosed in said UK 2040106.

After the flexible sheet 12 has been installed around the end support 5, an external casing 14 is slid or otherwise put into position. The flexible sheet may taped or otherwise affixed to the supports in order to ensure a good seal between them, particularly between them and any intervening mastic or gel or other sealing material. The drawing is an exploded view and the spacing between the supports 5 and the casing 14 is therefore exaggerated; nonetheless, the present design allows large tolerances in manufacture and the space between the supports and casing, which is sealed by the sheet, can be quite large. In this and other embodiments the sheet itself may have sufficient creep resistance that a gap of any desired size may be provided between the sheet and the casing.

Although pressure within the casing will tend to reinforce a seal between the supports or cables and the sheet (inner limb of the reentrant portion 13) it is desirable that some sealing material be provided.

The relevant surfaces of the sheet, the casing or the supports or cables or two or more of them may be coated with an adhesive, a sealant such as a mastic, or a gel. For example a double sided pressure sensitive adhesive tape could be wrapped circumferentially around cables or the parts 7 of the supports 5 to provide a surface to which the sheet 12 will adhere. Such a seal may, however, be provided by a gel due to its possible high temperature performance and to the resulting ease of re-entry.

In this first embodiment it will in general not be necessary to provide a seal between the outer limb of reentrant portion 13 and the casing 14 because a lack of seal here does not produce a leak path to the cable splice. (The question of sealing between overlapping longitudinal edges of a wrap-around sheet 12 will be raised below.) In fact it may be desirable that an excess external pressure can act between the edge portions 13 and the casing 14 to enhance the seal between the edge portions and the end supports 5. Where such excess pressure is likely to lead to collapse of the sheet 12 inwardly some additional support between the end supports 5 or cables may be desirable. Such additional support may comprise half-shells extending from one support 5 to the other. Half-shells need not each extend 180° of arc, and the term includes the use of three or more shells each of say 120° of arc or less. In general, however, we prefer that the basic structure of the splice case provided by the assembly of the inventon consists of only the flexible sheet and the outer casing (ancilliary components such as clips and clamps as desired may also be provided).

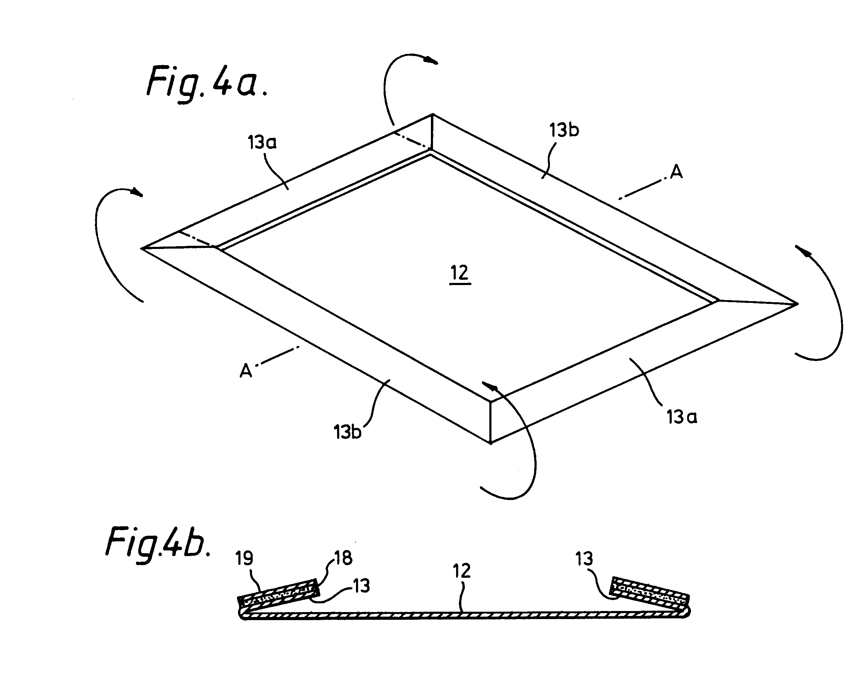

Maintenance of a seal under excess external pressure can be better understood by reference to Figure 3. The supports 6 may be omitted, and the sheet 12 may bear directly onto the cables. Where $P$ is larger than $P^1$ the seal between the sheet 12 and support 5 or cables, indicated by cross hatches, will not be put in peel, and a lack of seal between sheet 12 and casing 14 does not lead to a leak path into the splice case. Where $P^1$ is larger than $P$ the edge portion 13 of the sheet 12 will open out and again the seals will not be put in peel. In this instance the case acts to restrain the sheet against excessive expansion, but that feature is not required if the sheet has sufficient creep resistance.

Figure 3 also shows a pressure access valve 15 provided in one of the end supports 5, although it may be provided in the sheet. Furthermore, the end supports 5 are sealed to the cables 1 by means of an electrically heatable recoverable sleeve 11, powered through conductors 16. The sealing material used in the assembly may be heat-activatable, particularly electrically heat-activatable. Thus, the supports, the sleeves 11 or the sheet 12 may incorporate an electrical heater. The sleeves 11 may be of the wrap-around or tubular type, and may comprise a recoverable sleeve which is itself partially conductive and which will therefore get hot and shrink when connected to a source of electrical power. Alternatively, a separate electrical or other heater may be provided. We prefer that the electrical heater is self-regulating with respect to temperature, for example due to its comprising a conductive polymer composition that has a positive temperature coefficient of resistance (PTC). A switching temperature of 90° - 130°C will be suitable if the function of the heater is adhesive activation, and 130°C-160°C if its function is heat-recovery.

Sleeves which are inherently electrically heat-shrinkable may comprise a laminate of a sheet of recoverable PTC conductive polymer composition, a sheet electrode either side of the conductive polymer composition and an insulating layer covering the exposed surface of each electrode. The electrodes are preferably perforated, thus allowing them to collapse as the underlying polymer composition recovers. Improved electrical performance may be achieved if instead of a single layer of PTC material, one employs a two or more layer laminate such as a PTC material between the layers of substantially constant wattage material (i.e. material having a substantially zero temperature coefficient of resistance, ZTC). The sleeve is powered by attaching a conductor, optionally via a bus, to each electrode sheet, which will cause current to pass through the thickness of the sleeve.

The sleeve may be fabricated as described in tubular form but it may be simpler to produce a flat sheet and wrap it to form a sleeve. Opposing edge portions of the sleeve may be formed into rails (which rails may include a bus connected to respective electrodes) which can be held together, for example by a channel C-shaped in cross-section, to maintain the sheet in the wrapped configuration. Alternatively, opposing edge portions may form a lap joint which is then stitched.

An improved lap join may be made by removing at the lap join a strip of the lower electrode of the overlying edge portion and a strip of the upper electrode of the underlying edge portion. Then, a strip of PTC material is placed between the overlapping edges extending the length of the sleeve and effectively replacing the removed strips of electrodes. The lap join is then stitched as before. This design allows a lower profile of closure (the thickness of electrodes and insulation removed is greater than the thickness of the new strip of PTC material) and PTC controlled heating around the full circumference of the sleeve with reduced danger of shorting. This design of electrical sleeve is inventive in itself and may be used in the cable accessories and pipeline fields without the other components of the assembly of the invention.

Since the sleeves 11 face into the splice case, the seals between them and the cables will be inherently resistant to excess internal pressures. These seals will nonetheless be able to resist excess external pressures of the magnitude and duration likely to be encountered, if suitable adhesives and installation techniques are used. Provision for excess internal and excess external pressures at the support 5/casing 14 joint is preferably not made in the same way (i.e. by a high performance adhesive bond) partly because of the resulting difficulty of re-entry and partly because the effect of pressure in causing peel is greater at greater radii of curvature.

A further variation to the embodiment shown may be mentioned. One or both of the end supports 5 may have provision for two or more cables 1, either by means of a number of parts 6 equal to the number of cables, or by fewer parts 6 one or more of which parts accomodates two or more cables. Sealing of two or more cables in one part 6 may be accomplished by means of a branch-off clip as disclosed in GB Patent Publication 2019120. Where the supports 6 are omitted, such a branch-off clip may be used directly over the sheet 12.

Figures 4a and 4b show a flexible sheet 12 in which the reentrant or V-shaped portion 13 runs around all edges, instead of around only two as illustrated in Figure 2. The arrows show the way in which the sheet is wrapped around the cable splice and optionally end supports. The portions 13a, which will run longitudinally of the cable splice, help in preventing any leak path that may otherwise occur at the open ends of the edges 13 in the sheet of Figure 2. Also, the portions 13a may help to prevent leakage between the overlapping longitudinal edges of the sheet. It will not in general be necessary for the portions 13a to extend the whole width of the sheet, and the dotted portion (shown only at one edge) could be omitted, leaving the portons 13b simply closed at their ends.

The cross-section of Figure 4a shown in Figure 4b shows the end portions 13 coated with a sealing material 18 such as a mastic or gel or a tape for example comprising an open cell foam impregnated with a mastic or a gel. The sealing material 18, which may be reinforced by for example a glass fibre filling, is preferably covered before installation with a release layer 19. The sealing material preferably has a thickness of 0.5 - 3mm, especially about 1mm, and the sheet preferably has a thickness of 0.5 - 2mm, especially about 0.8 mm. The sheet is preferably substantially dimensionally non-recoverable and preferably comprises a polymeric material such as an ethylene vinylacetate copolymer, a polyamide or a polymer or other material having full thermal stability up to about 80°C. The sheet material may be beamed, and may be annealed. The sheet may comprise a laminate of two or more layers, for example a plastics layer and a layer of a metal foil.

Where a sealing material 18 is used that requires heat-activation, for example a hot-melt or otherwise activatable adhesive, means may be provided, preferably integrally with the sheet 12 for heating. Such means may comprise a resitance wire, or conductive polymer composition that is in thermal contact with the edge portions 13.

The size of the sheet will of course depend on the size of the cable splice or other substrate to be enclosed, but a length of 500-1000 mm, particulary about 760 mm and a width of 300-600 mm, particularly about 400mm may be regarded as typical. The portions 13 are preferably 20-40 mm, especially about 30mm wide. The edges of the sheet (ie the joins in the "Vs") are preferably produced by folding sheet material where possible and by welding where folding is not possible.

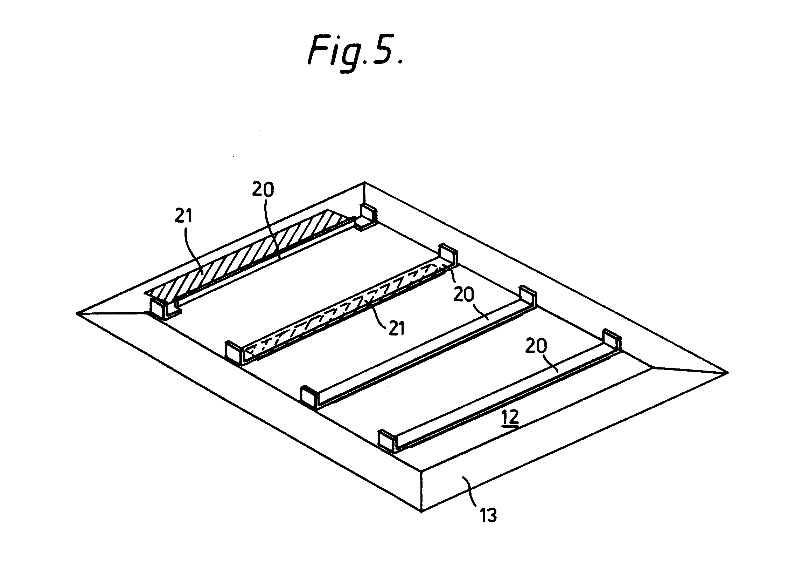

Figure 5 shows a sheet 12 having as an optional feature connecting rods or bars 20 attached to it. These bars 20 connect with the end supports 5 to provide longitudial strength to the splice case and to provide an internal support for the sheet 12 where necessary. The bars 20 may be attached to the sheet 12 by means of double adhesive tape 21. Alternatively they may run in pockets within the sheet or other mechanical attachment means may be used. Such bars may be used with the half-shells mentioned above, in which case they may engage the half-shells rather than the supports directly. These bars may be the same as or separate from the bars mentioned above which provide axial and/or torsional strength to the assembly.

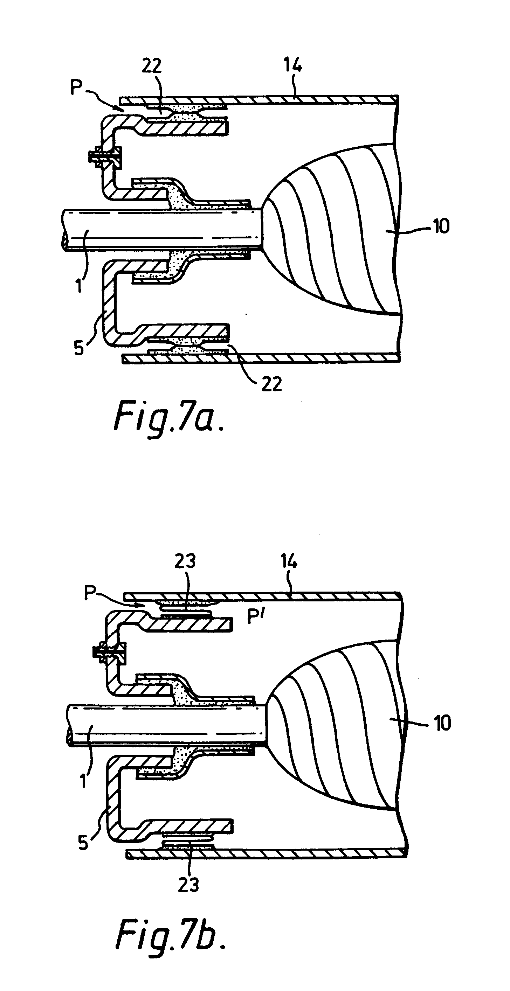

The question of sealing between overlapping longitudinal edges of a wrap-around sheet 12 may now be addressed. Prevention of a leak path into the splice case requires either (a) that a circumferential seal be maintained both between the sheet and the supports 5 or cables and the sheet and another component or, as is preferred, (b) where, say, the seal between the sheet and the casing is not required that the sheet and the supports or cables alone provide a sealed enclosure (the casing may still have a restraining function, and in any case may provide resistance against impact damage etc). Situation (a) relates to the second embodiment, which is illustrated in Figure 7. Situation (b) is what we are now concerned with.

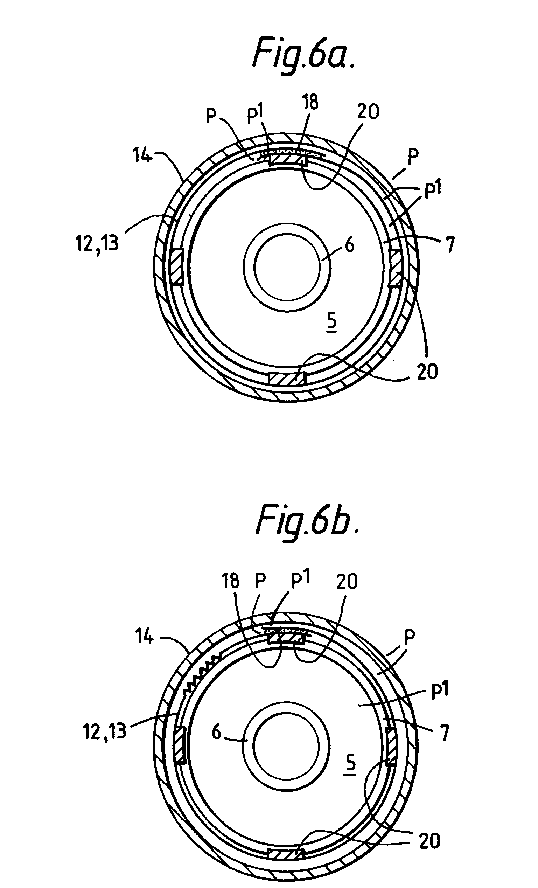

The problem is not severe because, in general, a simple lap join between the longitudinal edges of the sheet 12 need not be in peel as a result of either excess internal pressure or excess external pressure. Figures 6a and 6b are transverse cross-sections through a splice case showing the effect of excess internal and excess external pressures respectively. The ability of the design to function at large tolerances between the casing 14 and the end supports 5 (and therefore bars 20) can be seen. The longitudinal edges could however be overlapped in the opposite fashion to produce a lap joint in pigtail fashion. In that case, we prefer that one or both of the longitidinal edge portions is substantially V-shaped in cross-section (as in Figure 4a) since the peel that would otherwise result from internal pressure may be avoided. A longitudinal clamp may be provided to hold the lap joined edges together either during service or during installation, for example while an adhesive is activated and/or sets.

In Figure 6a an excess internal pressure forces the flexible sheet 12 against the casing 14. A seal 18 at the overlap is not subjected to peel because the same pressure ($P^1$) is exerted at each side of any free edge of the sheet. Similarly in Figure 6b, where excess external pressure causes the sheet to be forced against the parts 7 of the supports 5 and the bars 20, the seal 18 is not subjected to peel because the same pressure (here P) is exerted at each side of any free edge.

Although the seal 18 is not subjected to peel, it may be subjected to a shear force, especially at high excess internal pressure.

In general, the problem of shear can be dealt with in one or both of two ways. Firstly, one can use a seal which allows slippage until the sheet contacts the casing 14. A gel may be useful in that movement can occur without leak paths resulting. The longitudinal seal may be enhanced by means of magnetism, either by including magnetic material into the lapped edges and optionally the sealing material, or in external members which pinch the edges together magnetically. Secondly, one can reduce the extent to which the seal 18 is subjected to shear. This can be done by reinforcing the sheet or by attaching it to rods 20 or other members as shown in Figures 5 and 6, which members engage for example the end supports 5. Alternatively, the sheet itself may be capable of expansion under a force which is incapable of causing shear in the seal 18. This can be arranged by provision of means such as corrugations (including pleats and other overlaps) in at least part of the sheet as illustrated in Figure 6b or by employing as at least part of the sheet a material which can stretch.

In Figures 7a and 7b a first part of a flexible sheet is provided at each end of the assembly between the casing 14 and the supports 5. The first parts of the sheets have such a configuration that seals (shown cross-hatched) between the casing 14 and the sheet and between the support 5 and the sheet are not put into peel at excess internal or at excess internal pressures. A further component of the flexible sheet (which may be of similar material) joins the first part at the left-hand side of the splice as drawn to a similar part at the right-hand side of the splice case.

Two possibilities are shown, in each of which the sheet is of such a configuration that it can open out in response to higher pressures either side of it. In Figure 7a the sheet 22 has the form of two layers of flexible material welded or bonded together along their centres to form two reentrant shapes side-by-side. The sheet 23 in Figure 7b is in the form of two reentrant shapes one above the other, either made from two separate pieces of material or made integrally.

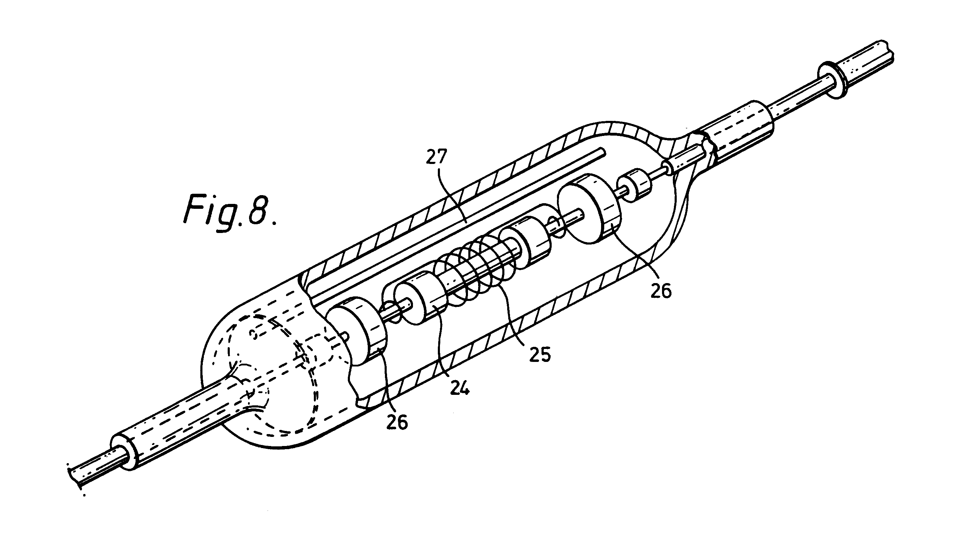

Figure 8 shows a device for controlling the electrical power supplied to any of the components of the assembly, particularly to the electrically recoverable sleeves 11 shown in Figure 3, or to any other electrically recoverable PTC device. The device of Figure 8 is preferably small enough for it to be attached to one of the conductors 16 of Figure 3 and to remain in the assembly after installation. Thus it is preferably 20-30mm in length and 10-15 mm in diameter.

The device illustrated is a timed ballast resistor which serves to prevent current in-rush into a sleeve 11, a feature which is desirable for use with many designs of conductive polymer heaters having a positive temperature coefficient of resistance. The device preferably has a high resistance for a period of time and then a low resistance thereafter. For example it may have a resistance of 0.6-1.0 ohm, preferably about 0.8 ohms, for 1-3 minutes, preferably about 2 minutes, after which its resistance becomes negligable. This time period is suitable for use in a circuit at 24 volts and 400-600 watts.

Any suitable electrical components maybe used, but the device illustrated has the following. The high resistance is provided by a resistance wire 25 of about 0.8 ohm, surrounding a carrier,for example a 100 ohm resistor 24. The ingoing and outgoing conductors are in electrical contact with copper discs 26, and a copper rod 27 (preferably of negligable resistance) is spaced a short distance, say 1mm, from the discs. These components may be housed in a heat-shrinkable sleeve. After current has flowed through the resistors for a certain time, the heat-shrinkable sleeve may displace a molten thermoplastic filler and thus cause the copper rod to contact the discs 26, effectively shorting out the resistor 25. Means other than the filler could be used for preventing premature shorting.

Other electrical controls may be used in the assembly of the invention.

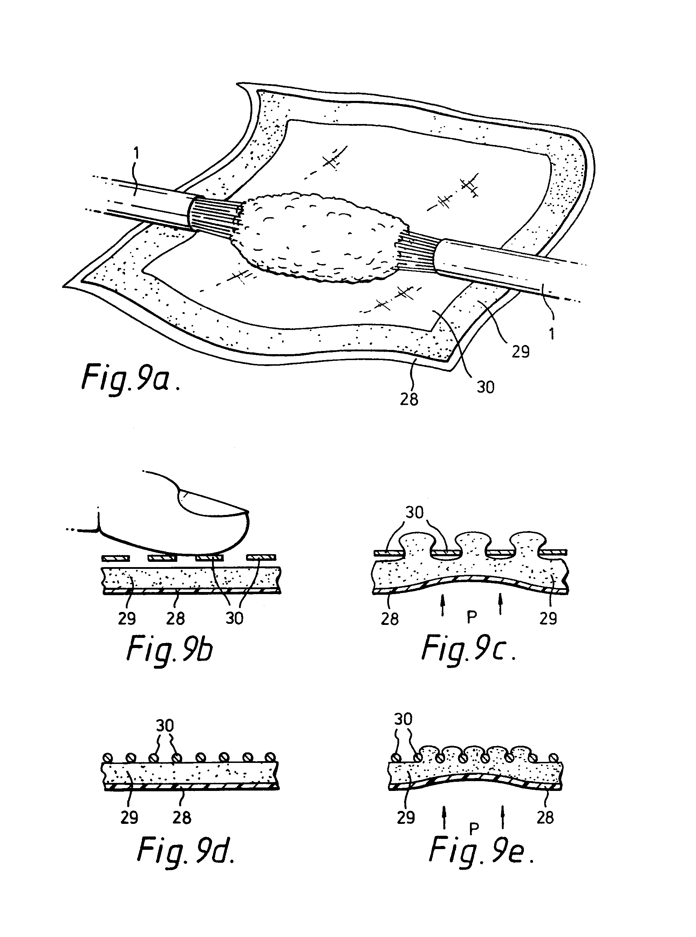

Figure 9 shows an article useful in the assembly described above, but also useful for environmental protection of substrates by itself. Thus the technique (explained below) employed by the article of figure 9 may be employed by the sheet 12 referred to above.

The article of Figure 9 overcomes a disadvantage found with some formulations of gel, including some preparations of the gel described above, namely difficulty in handling before use due to tackiness. The solution is temporarily to reduce the tackiness by treating the gel surface. This can be done such that the bulk properties of the gel are not affected and mechanical deformation of the article brings the gel properly into into contact with the surface to be protected. In general, a mechanical barrier is provided that can be broken up or destroyed or through which the gel can pass on the application of a mechanical force. This inventive idea is particularly useful for gels of low modulus and for articles where large areas are covered with gel. It allows a gel to be produced which is non-tacky to the touch but will seal to itself or to other materials, such as polyethylene or aluminium when pressure is applied.

Figure 9a shows a way of making a temporary enclosure around a splice between cables 1. A backing sheet of 28 for example a nylon film is coated at least around its periphery with a gel 29 having a surface of temporarily reduced tackiness. The backing sheet 28 can be wrapped around the splice to seal it, and later unwrapped to expose it.

One way of achieving the temporary reduction in tackiness is shown in Figures 9b and 9c. A net 30 (by which term we include meshes and other perforated materials) preferably of a flexible plastics material is applied to the surface of the gel 29. On handling before use, only the surface of the net 30 is touched, which is not tacky. However, if pressure is applied to the article (for example to the backing 28 or to the net 30), the gel is forced through the interstices to provide the desired seal. Removal of pressure may cause the gel to return to its previous position, allowing the article to be re-used.

An alternative embodiment is shown in Figures 9d and 9e, where a particulate material is used instead of a net. Such particulate material may comprise small glass or plastics balls or lead shot. We prefer glass balls having a diameter from 0.1-10mm, preferably 0.4 - 0.5mm.

**Claims**

1.  An assembly suitable for environmentally protecting a cable splice (10), which comprises:

    an impermeable sheet (12) that can be wrapped around the splice and which, optionally together with end supports (5), substantially totally encloses the splice;

    a sealing material (18) that together with the sheet can form an environmental seal around the splice; and

    a casing (14) that may be positioned around the wrapped splice;

characterized in that the sheet is flexible and has an edge portion (13) that is substantially V-shaped in cross-section, the arms of the V being able to open out in response to a pressure difference between the outside and inside of the wrapped sheet such that a seal formed by the sealing material to the sheet is not put into peel by the pressure difference.

2. An assembly according to claim 1 in which the apex of the V faces outwardly of the splice so that the arms of the V are able to open out under an excess pressure within the wrapped sheet.

3. An assembly according to claim 2, in which the sheet has a portion which an apex of a V faces into and an apex of a V faces out of the assembly and which can open out under the influence of excess pressure inside and excess pressure outside the assembly.

4. An assembly according to any preceding claim, in which the casing is substantially cylindrical, and which additionally comprises end supports at respective end portions of the casing, the sheet extending from one end support to the other such that the sheet forms a pressure retaining enclosure from the periphery of one end support to the periphery of the other end support.

5. An assembly according to any preceding claim in which the sealing material comprises a hot-melt adhesive.

6. An assembly according to any preceding claim, in which the sealing material comprises a gel.

7. An assembly according to claim 6, in which the gel has a cone penetration value of 150-350 ($10^{-1}$mm) according to ASTM D217-68 and an ultimate elongation of at least 200%.

8. An assembly according to claim 6, in which the gel includes a material capable of reducing the tackiness of the gel before mechanical deformation of the gel.

9. An assembly according to claim 4, in which the supports have means for sealing engagement to a cable.

10. An assembly according to any preceding claim in which the sealing material is provided on the sheet at said edge portion.

11. An assembly according to any preceding claim, in which the sealing material is heat-activatable, and which additionally comprises heating means for the sealing material.

12. An assembly according to claim 11, in which the heating means comprises an electrical heater positioned at said edge portion.

13. An assembly according to claim 12, in which the electrical heater comprises a conductive polymer composition in thermal contact with the edge portion.

14. An assembly according to any preceding claim in which the sheet is substantially rectangular and has an edge portion that is substantially V-shaped in cross section along at least two opposite edges.

15. An assembly according to claim 14 in which the sheet has an edge portion that is substantially V-shaped in cross-section along its four edges.

16. An assembly according to any preceding claim, in which the casing is substantially rigid and in which the sheet is highly flexible.

17. An assembly according to any preceding claim, in which the flexible sheet is substantially dimensionally non-recoverable.

18. An assembly according to any preceding claim, in which the edge portions are provided with a resiliently expansible member.

**Revendications**

1. Ensemble apte à protéger de l'environnement une épissure (10) de câble, qui comporte :
    une feuille imperméable (12) qui peut être enroulée autour de l'épissure et qui, optionnellement avec des supports extrêmes (5), renferme sensiblement totalement l'épissure ;
    une matière d'étanchéité (18) qui peut former, avec la feuille, un joint étanche à l'environnement autour de l'épissure ; et
    une boîte (14) qui peut être placée autour de l'épissure enveloppée ;
    caractérisé en ce que la feuille est flexible et comporte une partie de bord (13) qui est de section transversale sensiblement en forme de V, les branches du V étant capables de s'ouvrir en réponse à une différence de pression entre l'extérieur et l'intérieur de la feuille enroulée afin qu'un joint étanche formé par la matière d'étanchéité avec la feuille ne soit pas soumis à un pelage par la différence de pression.

2. Ensemble selon la revendication 1, dans lequel le sommet du V est tourné vers l'extérieur de l'épissure afin que les branches du V soient capables de s'ouvrir sous une pression excessive à l'intérieur de la feuille enroulée.

3. Ensemble selon la revendication 2, dans lequel la feuille comporte une partie dans laquelle un sommet d'un V est tourné vers l'intérieur de l'ensemble et un sommet d'un V est tourné vers l'extérieur de l'ensemble, et qui peut s'ouvrir sous l'effet d'une pression excessive à l'intérieur de l'ensemble et d'une pression excessive à l'extérieur de l'ensemble.

4. Ensemble selon l'une quelconque des revendications précédentes, dans lequel la boîte est sensiblement cylindrique, et qui comporte en outre des supports extrêmes à des parties extrêmes respectives de la boîte, la feuille s'étendant d'un support extrême à l'autre afin qu'elle forme une enceinte de retenue de pression de la périphérie d'un support extrême à la périphérie d'un autre support extrême.

5. Ensemble selon l'une quelconque des revendications précédentes, dans lequel la matière d'étanchéité comprend un adhésif thermofusible.

6. Ensemble selon l'une quelconque des revendications précédentes, dans lequel la matière d'étanchéité comprend un gel.

7. Ensemble selon la revendication 6, dans lequel le gel a une valeur de pénétration de cône de 150-350 ($10^{-1}$ mm) conformément à la norme ASTM D217-68 et un allongement à la rupture d'au moins 200 %.

8. Ensemble selon la revendication 6, dans lequel le gel comprend une matière capable de réduire l'adhésivité du gel avant une déformation mécanique du gel.

9. Ensemble selon la revendication 4, dans lequel les supports comportent des moyens destinés à engager de façon étanche un câble.

10. Ensemble selon l'une quelconque des revendications précédentes, dans lequel la matière d'étanchéité est prévue sur la feuille à ladite partie de bord.

11. Ensemble selon l'une quelconque des revendications précédentes, dans lequel la matière d'étanchéité peut être activée par la chaleur, et qui comporte en outre des moyens chauffants pour la matière d'étanchéité.

12. Ensemble selon la revendication 11, dans lequel les moyens chauffants comprennent un élément chauffant électrique placé à ladite partie de bord.

13. Ensemble selon la revendication 12, dans lequel l'élément chauffant électrique comprend une composition de polymère conducteur en contact thermique avec la partie de bord.

14. Ensemble selon l'une quelconque des revendications précédentes, dans lequel la feuille est sensiblement rectangulaire et comporte une partie de bord qui est de section transversale sensiblement en forme de V le long d'au moins deux bords opposés.

15. Ensemble selon la revendication 14, dans lequel la feuille comporte une partie de bord qui est d'une section transversale sensiblement en forme de V le long de ses quatre côtés.

16. Ensemble selon l'une quelconque des revendications précédentes, dans lequel la boîte est sensiblement rigide et la feuille est hautement flexible.

17. Ensemble selon l'une quelconque des revendications précédentes, dans lequel la feuille flexible n'est pratiquement pas douée de reprise dimensionnelle.

18. Ensemble selon l'une quelconque des revendications précédentes, dans lequel les parties de bord sont pourvues d'un élément élastiquement expansible.

**Patentansprüche**

1. Anordnung, die zum Schutz eines Kabelspleißes (10) gegenüber der Umgebung geeignet ist und folgendes aufweist:
   - einen undurchlässigen Flächenkörper (12), der um den Spleiß herumwickelbar ist und der, wahlweise zusammen mit Endabstützungen (5), den Spleiß im wesentlichen vollständig umschließt;
   - ein Dichtmaterial (18), das zusammen mit dem Flächenkörper um den Spleiß herum eine Umgebungsabdichtung bilden kann; und
   - ein Gehäuse (14), das um den umwickelten Spleiß herum positionierbar ist,

dadurch gekennzeichnet,
daß der Flächenkörper flexibel ist und einen Randbereich (13) hat, der im wesentlichen V-förmig im Querschnitt ist, wobei die Schenkel des V in der Lage sind, sich in Abhängigkeit von einer Druckdifferenz zwischen der Außenseite und der Innenseite des herumgewickelten Flächenkörpers nach außen zu öffnen, so daß bei einer von dem Dichtmaterial mit dem Flächenkörper gebildeten Abdichtung durch die Druckdifferenz keine Ablösung erfolgt.

2. Anordnung nach Anspruch 1,
bei der der Scheitel des V von dem Spleiß nach außen weist, so daß die Schenkel des V in der Lage sind, sich bei einem Überdruck innerhalb des herumgewickelten Flächenkörpers nach außen zu öffnen.

3. Anordnung nach Anspruch 2,
bei der der Flächenkörper einen Bereich hat, von dem ein Scheitel eines V in die Anordnung hinein und ein Scheitel eines V aus der Anordnung nach außen weist und der sich unter dem Einfluß von Überdruck innerhalb und von Überdruck außerhalb der Anordnung nach außen öffnen kann.

4. Anordnung nach einem der vorherigen Ansprüche,
bei der das Gehäuse im wesentlichen zylindrisch ist und die zusätzlich an entsprechenden Endbereichen des Gehäuses Endabstützungen aufweist, wobei der Flächenkörper von einer Endabstützung zur anderen verläuft, so daß der Flächenkörper vom Umfang der einen Endabstützung bis zum Umfang der anderen Endabstützung eine Druckhalteumhüllung bildet.

5. Anordnung nach einem der vorherigen Ansprüche,
bei der das Dichtmaterial einen Schmelzkleber aufweist.

6. Anordnung nach einem der vorherigen Ansprüche,
bei der das Dichtmaterial ein Gel aufweist.

7. Anordnung nach Anspruch 6,
bei der das Gel einen Konuspenetrationswert von 150 bis 350 ($10^{-1}$ mm) nach ASTM D217-68 und eine Bruchdehnung von wenigstens 200 % hat.

8. Anordnung nach Anspruch 6,
bei der das Gel ein Material enthält, das die Klebrigkeit des Gels vor dessen mechanischer Verformung verringern kann.

9. Anordnung nach Anspruch 4,
bei der die Abstützungen Mittel zum abdichtenden Eingriff mit einem Kabel haben.

10. Anordnung nach einem der vorherigen Ansprüche,
bei der das Dichtmaterial auf dem Flächenkörper an dem Randbereich vorgesehen ist.

11. Anordnung nach einem der vorherigen Ansprüche,
bei der das Dichtmaterial durch Wärme aktivierbar ist und die zusätzlich eine Heizeinrichtung für das Dichtmaterial aufweist.

12. Anordnung nach Anspruch 11,
bei der die Heizeinrichtung eine an dem Randbereich positionierte elektrische Heizung aufweist.

13. Anordnung nach Anspruch 12,
bei der die elektrische Heizung eine leitfähige Polymerzusammensetzung in thermischem Kontakt mit dem Randbereich aufweist.

14. Anordnung nach einem der vorherigen Ansprüche,
bei der der Flächenkörper im wesentlichen rechteckig ist und einen Randbereich hat, der entlang wenigstens zwei entgegengesetzter Ränder im wesentlichen V-förmigen Querschnitt hat.

15. Anordnung nach Anspruch 14,
bei der der Flächenkörper einen Randbereich hat, der entlang seiner vier Ränder im wesentlichen V-förmigen Querschnitt hat.

16. Anordnung nach einem der vorherigen Ansprüche,
bei der das Gehäuse im wesentlichen steif und der Flächenkörper hochflexibel ist.

17. Anordnung nach einem der vorherigen Ansprüche,
bei der der flexible Flächenkörper im wesentlichen dimensionsmäßig nicht rückstellbar ist.

18. Anordnung nach einem der vorherigen Ansprüche,
bei der die Randbereiche mit einem elastisch dehnungsfähigen Element versehen sind.

PRIOR ART

Fig.1.

Fig.3.

Fig.2.

Fig.4a.

13a  13b  A

A  12

13b  13a

Fig.4b.

19  18  13  12  13

EP 0 196 767 B1

Fig.5.

# Fig.6a.

# Fig.6b.

*Fig.7a.*

*Fig.7b.*

Fig.8.

Fig.9a.

Fig.9b

Fig.9c.

Fig.9d.

Fig.9e.